# NEUE EUROPÄISCHE PATENTSCHRIFT

(11) **EP 1 791 777 B2**
(45) Veröffentlichungstag und Bekanntmachung des Hinweises auf die Entscheidung über den Einspruch: **24.01.2018**
(45) Hinweis auf die Patenterteilung: 02.06.2010
(21) Anmeldenummer: 05784031.6
(22) Anmeldetag: 09.09.2005
(51) Int. Cl.: B66C 1/12

(54) **SCHUTZELEMENT FÜR TEXTILE ZURR- ODER ANSCHLAGMITTEL UND MIT EINEM SOLCHEN SCHUTZELEMENT AUSGESTATTETES ZURR- ODER ANSCHLAGMITTEL**
PROTECTIVE ELEMENT FOR TEXTILE LASHING OR FIXING MEANS, AND LASHING OR FIXING MEANS PROVIDED WITH ONE SUCH PROTECTIVE ELEMENT
ELEMENT DE PROTECTION POUR SYSTEMES D'AMARRAGE OU DE BLOCAGE TEXTILES ET SYSTEMES D'AMARRAGE OU DE BLOCAGE EQUIPES D'UN TEL ELEMENT DE PROTECTION

(30) Priorität: 20.09.2004 DE 102004045905
(43) Veröffentlichungstag der Anmeldung: 06.06.2007
(73) Patentinhaber: Spanset Inter AG, 8832 Wollerau (CH)
(72) Erfinder: DOHSE, Lars, 52076 Aachen (DE); GLASEN, Werner, 52134 Herzogenrath (DE)
(74) Vertreter: Cohausz & Florack
(86) Internationale Anmeldenummer: PCT/EP2005/009701
(87) Internationale Veröffentlichungsnummer: WO 2006/032381

(56) Entgegenhaltungen:
- EP-A- 0 556 452
- EP-A- 1 103 652
- EP-A1- 0 110 342
- DE-U1- 29 515 832
- US-A- 4 124 244

## Beschreibung

Die Erfindung betrifft ein Schutzelement gemäß dem Oberbegriff des Anspruchs 1 für textile Zurr- oder Anschlagmittel zum Heben, Spannen oder Zurren von Gegenständen, mit einer Schutzlage, die dazu bestimmt ist, zwischen dem Zurr- oder Anschlagmittel und dem jeweiligen Gegenstand angeordnet zu werden. Darüber hinaus betrifft die Erfindung ein mit einem derartigen Schutzelement ausgestattetes Zurr- oder Anschlagmittel.

Bei den betreffenden Zurr- oder Anschlagmitteln kann es sich beispielsweise um Seile, Gurte oder Bänder handeln, die unter eine Zugkraft gesetzt werden, um den jeweiligen Gegenstand zu halten, anzuheben oder zu transportieren. Anschlagmittel werden dabei eingesetzt, um beispielsweise beim Heben oder Bewegen von Lasten die Verbindung zwischen der Last und der Hebe- bzw. Zugeinrichtung herzustellen. Zurrmittel werden dagegen benötigt, um Güter festzuhalten. So werden Zurrmittel insbesondere zur Ladungssicherung auf Fahrzeugen eingesetzt.

Unabhängig davon, ob es an einem Zurrmittel oder einem Anschlagmittel eingesetzt wird, hat das Schutzelement jeweils die Aufgabe, eine Beschädigung des jeweiligen Zurr- oder Anschlagmittels im Bereich von Kanten oder anderen Formelementen zu verhindern, an denen das Zurr- oder Anschlagmittel umgelenkt wird. In diesen Bereichen kommt es zu hohen Flächenpressungen, die wiederum zu hohen Reibungskräften führen und die Gefahr mit sich bringen, dass scharfe Kanten des jeweiligen Gegenstandes in das Zurr- oder Anschlagmittel schneiden.

Zum Schutz gegen derartige Beschädigungen wird jeweils ein Schutzelement mit seiner Schutzlage im Bereich der Umlenkstellen zwischen das jeweilige Zurr- oder Anschlagmittel und den betreffenden Gegenstand positioniert, so dass das Zurr- oder Anschlagmittel nicht mehr unmittelbar den Gegenstand berührt, sondern auf der Schutzlage aufliegt. Die Schutzlage selbst nimmt dabei keine Halte- oder Spannkräfte auf, so dass sie ausschließlich im Hinblick auf ihre Schutzfunktion optimiert gestaltet werden kann. Auf diese Weise lassen sich Beschädigungen des Zurr- oder Anschlagmittels verhindern, zu denen es andernfalls in Folge der beim Spannen des Zurr- oder Anschlagmittels oder beim Transport unvermeidbaren Relativbewegungen zwischen dem Zurr- oder Anschlagmittel und dem Gegenstand kommen kann.

Ein Beispiel für ein Schutzelement der voranstehend erläuterten Art ist in der EP 1 103 652 A1 beschrieben. Das dort gezeigte Zurr- oder Anschlagmittel ist in seinem Schlingenbereich von dem in diesem Fall schlauchartigen Schutzelement umgeben, dessen Weite es erlaubt, das Zurr- oder Anschlagmittel frei durch das Schutzelement zu schieben. Vergleichbare Schutzschläuche werden bei Rundschlingen genutzt, um das innenliegende Trägermaterial des jeweiligen Zurr- oder Anschlagmittels vor Schnitten und Scheuerungen zu schützen.

In der Praxis problematisch erweist sich bei Schutzelementen der voranstehend erläuterten Art, dass sie zwar wirkungsvoll den Schutz des Zurr- oder Anschlagmittels gegen abrasiven Verschleiß gewährleisten, dass im Gebrauch jedoch die Reibung zwischen dem lastaufnehmenden Zurr- oder Anschlagmittel und dem Schutzelement an den Umlenkstellen sehr hoch wird. Dies hat zur Folge, dass die vom Zurr- oder Anschlagmittel aufgenommenen bzw. aufgebrachten Kräfte von Umlenkstelle zu Umlenkstelle nicht gleichmäßig weitergeleitet werden, sondern dass es an den Umlenkstellen zu starken Belastungssprüngen im Zurr- oder Anschlagmittel kommt.

Diese Belastungssprünge werden dadurch verursacht, dass das Zurr- oder Anschlagmittel im Bereich der Umlenkstellen trotz der Anwesenheit eines Schutzelements nur schlecht gleiten kann.

Beim Heben von Gegenständen führen die mangelhaften Gleiteigenschaften im Bereich der Umlenkstellen zu einer stark ungleichmäßigen Belastung der unterschiedlichen Abschnitte des jeweils verwendeten Zurr- oder Anschlagmittels. Dies kann dazu führen, dass das jeweils zu hebende Gut beim Anheben ruckartig seine Lage im jeweiligen Hebezeug ändert, wenn die Wirkung der Gewichtskraft so stark ansteigt, dass die im Bereich der Umlenkstellen zuvor in Folge der Reibung wirkende Hemmung plötzlich überwunden wird.

Besonders problematisch erweist sich die im Bereich von Umlenkstellen einstellende Ungleichförmigkeit der Kraftübertragung jedoch bei Zurrguten, die mit hohen Spannkräften beaufschlagt werden, um Lasten zu halten.

Gemäß der Norm EN12195-1, die den Einsatz von Zurrgurten beschreibt und regelt, wird von einem hohen Verlust der Vorspannung bei Umlenkstellen ausgegangen. Die betreffende Norm besagt, dass mit einem Verlust von 50 % der Vorspannung zwischen der Seite des Zurrgurtes, wo das jeweils verwendete Spanngerät angebracht ist, und der gegenüberliegenden Seite der gezurrten Ladung gerechnet werden muss. Dies bedeutet, dass bei einer normierten am Spanngerät aufgebrachten Vorspannkraft (STF genannt) für die gegenüberliegende Seite der Ladung nur der halbe Wert erwartet werden darf. Praktische Erfahrungen lehren, dass der Verlust an Vorspannung zwischen den zwei Seiten der Ladung sogar wesentlich höher (bis zu 80 %) sein kann. Um die jeweilige Ladung beidseits sicher zu halten, muss der Zurrgurt daher mit besonders hoher Kraft vorgespannt werden, um sicher zu stellen, dass auch hinter den Umlenkstellen noch ausreichend hohe Kräfte wirksam sind, um den sicheren Halt der Ladung zu garantieren.

Es ist versucht worden, die Gleichförmigkeit der Belastung des Zurr- oder Anschlagmittels dadurch zu verbessern, dass anstelle der textilen Schutzelemente im Bereich der kritischen Umlenkstellen Führungen für das Zurr- oder Anschlagmittel eingesetzt werden, die aus Kunststoffen oder anderen Materialien mit verbesserten Gleiteigenschaften hergestellt sind. Nachteilig dabei ist jedoch, dass derartige Führung in der Regel formsteif sind und demzufolge jeweils nur für einen speziellen Anwendungszweck geeignet sind.
Aus EP 0 556 452 A1 ist ein Schutzelement gemäß dem Oberbegriff des Anspruchs 1 bekannt. Ausgehend von dem voranstehend erläuterten Stand der Technik lag der Erfindung die Aufgabe zugrunde, ein Schutzelement der eingangs angegebenen Art zu schaffen, das es ermöglicht, die Vorteile der bekannten, auf einem textilen Material basierenden Schutzelemente zu nutzen, gleichzeitig jedoch eine verbesserte Kraftübertragung im Bereich der Umlenkstellen sicherstellt. Ebenso sollte ein Zurr- oder Anschlagmittel geschaffen werden, das die zum Heben, Spannen oder Zurren eines Gegenstandes erforderlichen Kräfte bei gleichmäßigerer Belastung über seine *Länge aufbringen kann*.

In Bezug auf ein Schutzelement für textile Zurr- oder Anschlagmittel zum Heben, Spannen oder Zurren von Gegenständen, mit einer Schutzlage, die dazu bestimmt ist, zwischen dem Zurr- oder Anschlagmittel und dem jeweiligen Gegenstand angeordnet zu werden, ist die voranstehend angegebene Aufgabe erfindungsgemäß durch ein Schutzelement mit den Merkmalen des Patentanspruchs 1 gelöst worden.

Die Erfindung vereinigt die Vorteile eines aus einem textilen Gewebe gefertigten Schutzelements, nämlich die Fähigkeit, sich aufgrund der dem Gewebe eigenen Flexibilität an beliebige Formen anlegen zu können, mit den Vorteilen von Führungselementen, die aufgrund ihrer Formgebung verbesserte Gleiteigenschaften besitzen.

Erreicht wird dies erfindungsgemäß dadurch, dass zwei in Wirkverbindung stehende textile Elemente miteinander kombiniert werden. Das Grundgewebe schützt dabei das Zurr- oder Anschlagmittel nach Außen gegen eine scheuernde oder schneidende Belastung und stellt gleichzeitig auf seiner dem Zurr- oder Anschlagmittel zugeordneten Oberfläche eine Struktur bereit, durch die ein die Gleiteigenschaften verbesserndes textiles Material sicher positioniert ist.

Die durch das vom Grundgewebe getragene textile Material erreichte Verbesserung der Gleiteigenschaften wird dadurch bewirkt, dass das Material eine Formgebung besitzt, durch die die jeweils wirksame Reibfläche minimiert wird. Auf diese Weise herrscht zwischen Zurr- oder Anschlagmittel und Schutzelement bei unverändert hoher Schutzwirkung eine insgesamt geringere Reibung.

Mit der Erfindung steht so ein Schutzelement zur Verfügung, dass die Reibung an den Umlenkstellen des Zurr- oder Anschlagmittels auf ein Minimum reduziert und eine gleichmäßigere Verteilung der Belastung des jeweiligen Zurr- oder Anschlagmittels gewährleistet.

Dementsprechend ist die oben *angegebene* Aufgabe in Bezug auf das Zurr- oder Anschlagmittel dadurch gelöst worden, dass ein solches Zurr- oder Anschlagmittel mit einem erfindungsgemäßen Schutzelement ausgestattet ist.

Besonders vorteilhaft erweist sich die Erfindung insbesondere dann, wenn das erfindungsgemäße Schutzelement an einem Anschlagelement eingesetzt wird, das als Zurrgurt zum Befestigen von Lasten verwendet wird. Die Erfindung ermöglicht es dem Benutzer, die erforderliche Spannkraft im Zurrgurt an den Umlenkkanten bei minimierten Verlusten weiterzuleiten und so ein effizientes Zurren durchzuführen. Versuche haben gezeigt, dass sich bei Einsatz erfindungsgemäß ausgebildeter Schutzelemente die durch Reibung an den Umlenkungen des Zurrgurtes entstehenden Verluste an Vorspannkraft auf Werte begrenzen lassen, die deutlich unter den mit herkömmlichen Schutzelementen erreichten Verlusten liegen (bis zu 20 %).

Ein besonders sicherer Halt des Schutzelements am jeweiligen Zurr- oder Anschlagmittel wird dadurch gewährleistet, dass das Schutzelement schlauchförmig ausgebildet ist und dass das vom Grundgewebe getragene textile Material sich mindestens über einen Längsabschnitt der Innenseite des Schutzelements erstreckt. Im Einsatz wird das derart ausgebildete Schutzelement am Zurr- oder Anschlagmittel so ausgerichtet, dass der mit dem zusätzlichen textilen Material versehene Längsabschnitt zur Auflage an den jeweiligen Gegenstand kommt.

Schlauchförmige erfindungsgemäße Schutzelemente haben den weiteren Vorteil, dass sie sich webtechnisch herstellen lassen und das Zurr- oder Anschlagmittel um seinen gesamten Umfang schützen. Abhängig von den zur Verfügung stehenden Produktionsmitteln kann es dabei zweckmäßig sein, das vom Grundmaterial getragene textile Material über die gesamte Innenfläche des Schutzelements verteilt anzuordnen. Dies hat darüber hinaus den Vorteil, dass das Schutzelement unabhängig davon, wie es zur Anlage an den jeweiligen Gegenstand kommt, eine optimale Gleiteigenschaft bietet. Eine optimierte Materialausnutzung ergibt sich demgegenüber dann, wenn die Anordnung des textilen Materials auf den Bereich des Grundgewebes beschränkt wird, der bei ordnungsgemäßem Gebrauch des Zurr- oder Anschlagmittels regelmäßig am betreffenden Gegenstand anliegt.

Die Vielseitigkeit eines erfindungsgemäßen Schutzelements lässt sich dadurch verbessern, dass es sich so an dem jeweiligen Zurr- oder Anschlagmittel befestigen lässt, dass es frei in dem Schutzelement verschiebbar ist.

Gemäß der Erfindung ist das vom Grundgewebe getragene textile Material fest mit dem Grundgewebe verwebt. Ein derart beschaffenes Schutzelement lässt sich in einem Arbeitsgang herstellen und gewährleistet eine dauerhaft sichere Verbindung zwischen dem Grundgewebe und dem von ihm getragenen textilen Material.

Die erfindungsgemäße Verbesserung der Gleiteigenschaft wird dadurch erreicht, dass mit Hilfe des zusätzlichen textilen Materials auf dem Grundgewebe eine Oberflächenstruktur geschaffen wird, deren zur Anlage an das Zurr- oder Anschlagmittel kommende, im Hinblick auf die Reibung effektive Fläche minimiert ist.

Eine solche Oberflächenstruktur ist gegeben, da das vom Grundgewebe getragene textile Material Erhebungen bildet. Das Schutzelement kommt nur noch im Bereich der freien Spitzen der Erhebungen mit dem Zurr- oder Anschlagmittel direkt in Berührung. Besonders gute Gleiteigenschaften werden dadurch erzielt, dass das vom Grundgewebe getragene Material sich in Längsrichtung der Schutzlage erstreckende Rippen bildet. Diese lassen sich webtechnisch besonders einfach erzeugen.

Bei besonders hohen Belastungen des Schutzelements, wie sie beispielsweise beim Verzurren von scharfkantigen Gegenständen, wie Containern oder Kisten, auf der Ladefläche eines Fahrzeugs auftreten, wird die Lebensdauer und Wirksamkeit erfindungsgemäßer Schutzelemente dadurch weiter erhöht, dass das vom Grundgewebe getragene textile Material aus hochfester Faser besteht. Dabei kann es vorteilhaft sein, als textiles Material ein Fasergemisch zu verwenden, dessen einzelne Komponenten so miteinander kombiniert sind, dass optimale Eigenschaften hinsichtlich des Reibverhaltens und der Festigkeit erreicht werden. Zu diesem Zweck kann ein textiles Material eingesetzt werden, das gezwirnt ist.

Besonders gute Gleiteigenschaften ergeben sich, wenn das vom Grundgewebe getragene textile Material eine glattere Oberfläche aufweist als das Grundgewebe.

Um sicherzustellen, dass auch unter harten Einsatzbedingungen im praktischen Einsatz eine stets lagerichtige Positionierung der erfindungsgemäßen Schutzelemente vorgenommen werden kann, kann in das Grundgewebe eine Markierung eingewebt sein, die die Lage des vom Grundgewebe getragenen textilen Materials anzeigt.

Bei besonders starken Scheuerbelastungen der Außenflächen des Schutzelements kann es zweckmäßig sein, auf diese Außenflächen eine zusätzliche Beschichtung aufzubringen. Wird das Schutzelement um scharfe Kanten gelegt, so sollte das Schutzelement mit einem zusätzlichen Schnittschutz kombiniert werden.

Nachfolgend wird die Erfindung anhand einer Ausführungsbeispiele darstellenden Zeichnung näher erläutert. Es zeigen jeweils schematisch:
- Fig. 1: ein Schutzelement für ein Zurrmittel in perspektivischer Ansicht;
- Fig. 2: einen Anschlag mit dem in Fig. 1 dargestellten Schutzelement in perspektivischer Ansicht;
- Figuren 3 bis 6: jeweils ein an einem Zurrmittel befestigtes Schutzelement ausschnittsweise im Querschnitt.

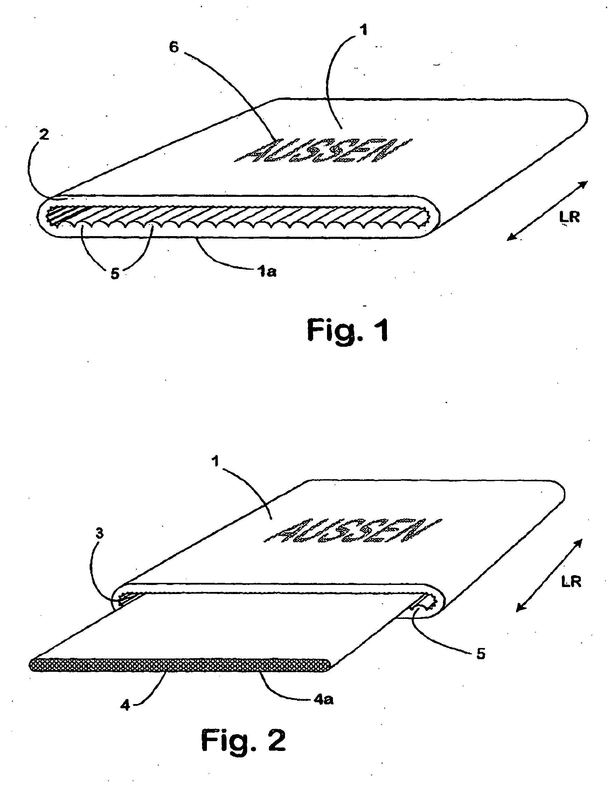

Das in den Figuren 1 und 2 dargestellte Schutzelement 1 ist schlauchförmig ausgebildet. Es weist ein zu einem Schlauch gewebtes Grundgewebe 2 auf, das die Außenlage des Schutzelements 1 bildet und aus Textilfasern hergestellt ist, die besonders abriebfest sind und auch hohen Scheuerbelastungen, wie sie beim Verzurren von scharfkantigen Gegenständen auftreten, sicher widerstehen.

Das Schutzelement 1 umgrenzt einen Innenraum 3, der eine im Querschnitt annähernd rechtwinklige Form besitzt. Die Höhe des Innenraums 3 ist um ein geringes Übermaß größer als die Dicke des Zurrmittels 4, für dessen Schutz das Schutzelement 1 eingesetzt wird. Ebenso ist die Breite des Innenraums 3 um ein Übermaß größer als die Breite des Zurrmittels 4. Auf diese Weise kann das Schutzelement S im unbelasteten Zustand frei über das Zurrmittel 4 geschoben werden.

Bei dem Zurrmittel 4 handelt es sich hier um einen flach und breit ausgebildeten konventionellen Zurrgurt, wie er typischerweise eingesetzt wird, um eine hier nicht gezeigte Last, beispielsweise einen Container oder einen vergleichbar sperrigen Behälter, auf der Ladefläche eines Fahrzeugs festzuzurren. Das Schutzelement 1 wird dabei mit seiner einen Breitseite 1a auf eine der Kanten der nicht dargestellten Last gelegt. Diese Breitseite 1a bildet dann die Schutzlage, durch die das Zurrmittel 4 unmittelbar gegen scheuernde oder schneidende Belastung geschützt wird.

Beim Schutzelement 1 trägt das Grundgewebe 2 auf der dem Innenraum 3 zugeordneten Innenfläche der die Schutzlage bildenden Breitseite 1a in den Innenraum 3 vorstehende, sich in Längsrichtung L des Schutzelements 1 erstreckende Rippen 5. Die Rippen 5 sind durch ein textiles Material gebildet, das fest mit dem Grundgewebe 2 verwebt ist.

Bei dem die Rippen 5 bildenden textilen Material handelt es sich um hochfeste Fasern mit besonders glatter Oberfläche. Derartige hochfeste Fasern werden beispielsweise unter der Produktbezeichnung "Dyneema" von der DSM Dynema BV, Heerlen, Niederlande, oder unter der Bezeichnung "Vectran" von der Celanese Acetate LLC, Charlotte, North Carolina, USA, angeboten. Die Materialbeschaffenheit dieser Fasern ist dabei so auf das Außenmaterial des Zurrmittels 4 abgestimmt, dass das Zurrmittel 4 auch dann noch mit minimierter Reibung auf den Rippen 5 gleiten kann, wenn im gespannten Zustand hohe Flächenpressung zwischen den Rippen 5 und der auf ihnen aufliegenden Außenfläche 4a des Zurrmittels 4 herrschen.

Das Grundgewebe 3 kann beispielsweise aus Polyester, Polyamid oder Polypropylen hergestellt werden.

Um dem Nutzer des mit dem Schutzelement 1 ausgestatteten Zurrmittels 4 anzuzeigen, welche der beiden Breitseiten 1a, 1b des Schutzelements 1 der zu befestigenden Last zuzuordnen ist und welche im verzurrten Zustand außen liegen soll, ist in die nicht mit Rippen versehene Breitseite 1b ein entsprechender Schriftzug 6 eingewebt.

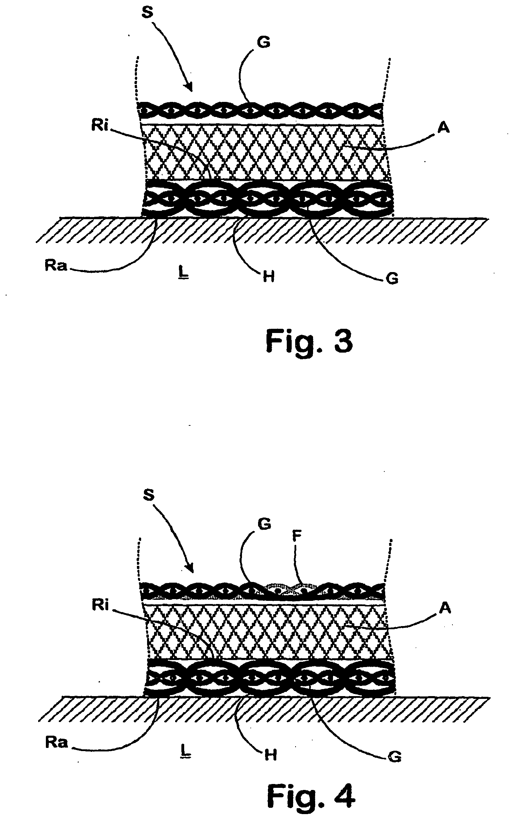

Die Figuren 3 bis 6 zeigen verschiedene Möglichkeiten, wie das die Gleiteigenschaften verbessernde textile Material so mit dem jeweiligen Grundgewebe G verbunden werden kann, dass die angestrebte Minimierung der Reibung zwischen dem jeweiligen Zurrmittel A und dem jeweiligen Schutzelement S erreicht wird.

Beim in Fig. 3 dargestellten Ausführungsbeispiel ist zu diesem Zweck in der der dort angedeuteten Last L zugewandten Seite des schlauchförmigen Schutzelements S in an sich bekannter Weise erfindungsgemäß eine hochfeste Faser H als Schussfaden zusätzlich zu den aus einer abriebfesten Textilfaser bestehenden Schussfäden des Grundgewebes G derart in das Grundgewebe G eingewebt worden, dass die Fasern H sich in Längsrichtung des Schutzelements erstreckende Rippen Ri,Ra bilden.

Die inneren Rippen Ri stehen dabei auf der Innenfläche der Breitseite 1a des Schutzelements 1, die dem das Zurrmittel A aufnehmenden Innenraum des Schutzelements zugeordnet ist, während die Rippen Ra sich auf der der Last L zugeordneten Außenfläche derselben Breitseite 1a des Schutzelements S erheben. Die vom Grundgewebe G getragenen und fest mit ihm verwebten Fasern H bilden so einerseits auf der Innenfläche des Schutzelements 1 linienförmige Gleitflächen, auf denen das Zurrmittel A mit verminderter Reibung in Längsrichtung des Schutzelements S gleiten kann. Andererseits schützen die auf der Außenseite des Schutzelements S gebildeten Rippen Ra das Schutzelement S auch bei hohen Belastungen vor Beschädigungen.

Das in den Figuren 1 und 2 dargestellte Schutzelement 1 weist beispielsweise einen Aufbau wie das in Fig. 4 dargestellte schlauchförmige Schutzelement S auf.

Beim in Fig. 4 dargestellten Ausführungsbeispiel sind genauso wie beim voranstehend erläuterten, in Fig. 3 gezeigten Ausführungsbeispiel innere Rippen Ri und äußere Rippen Ra auf der die Schutzlage bildenden Breitseite des Schutzelements S durch mit dem Grundgewebe G verwobene hochfeste Fasern H gebildet. Zusätzlich ist in das Grundgewebe G auf der gegenüberliegenden Breitseite des Schlitzelements S mit andersfarbigen Fasern F ein Schriftzug eingewebt, der die Lage der keine Rippen aufweisenden, im Gebrauch außen anzuordnenden Seite des Schutzelements S anzeigt.

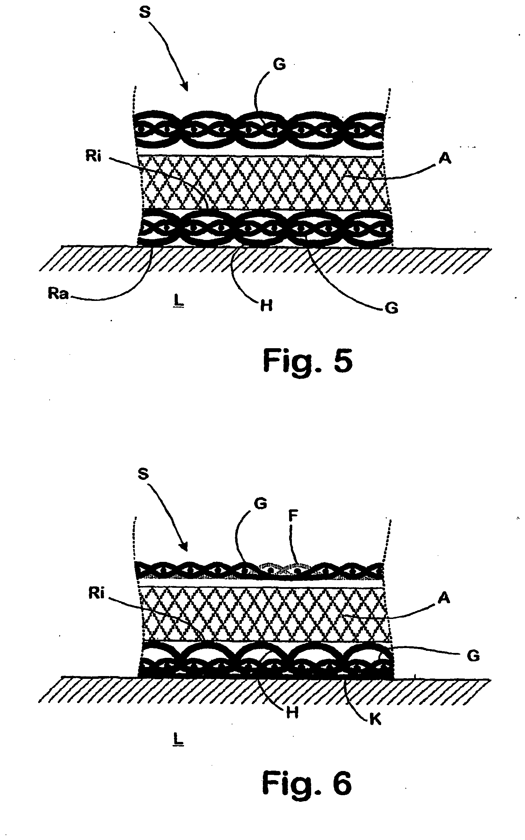

Beim in Fig. 5 gezeigten Ausführungsbeispiel ist eine solche Unterscheidung der der Last L zugeordneten und mit Rippen Ri,Ra versehenen Breitseite und der außen anzuordnenden Breitseite des schlauchförmigen Schutzelements S nicht erforderlich. Dort sind nämlich Rippen Ri,Ra über den gesamten Umfang des Schutzelements S auf dessen Innen- und Außenseite ausgebildet, indem die hochfesten Fasern H über den gesamten Umfang des Schutzelements S in das Grundgewebe G eingewebt worden sind.

In Fig. 6 ist schließlich ein Ausführungsbeispiel eines Schutzelements S gezeigt, bei dem entsprechend dem in Fig. 4 dargestellten Ausführungsbeispiel die im Einsatz außen liegende Breitseite des schlauchförmigen Schutzelements S durch einen mittels farbiger Fasern F in das Grundgewebe G eingewebten Schriftzug gekennzeichnet ist. Zusätzlich sind auf der Innenseite der der Last L zugeordneten Breitseite des Schutzelements durch hochfeste, in das Grundgewebe G eingewebte Fasern H Rippen Ri ausgebildet, auf denen das Zurrmittel A gleiten kann. Anders als beim Ausführungsbeispiel der Fig. 4 sind die hochfesten Fasern H während des Webens dieses Schutzelements S jedoch so geführt worden, dass auf der der Last L zugeordneten Seite des Schutzelements S keine Rippen entstanden sind. Stattdessen liegen die Fasern H dort flach im Grundgewebe G. Auf diese Weise kann das in Fig. 6 gezeigte Schutzelement S mit einer maximalen Auflagefläche auf der Last L aufliegen und so einen optimierten Schutz insbesondere gegen scheuernde Belastung bieten. Um die Scheuerbeständigkeit der an der Last L anliegenden Außenfläche des Schutzelements S zusätzlich zu verbessern, ist auf diese Außenfläche eine Schutzschicht K aus einem elastischen, abriebfesten Kunststoff aufgetragen.

### BEZUGSZEICHEN

Figuren 1,2
   - 1: Schutzelement
   - 1a, 1b: Breitseiten des Schutzelements 1
   - 2: Grundgewebe
   - 3: Innenraum des Schutzelements 1
   - 4: Zurrmittel
   - 4a: Außenfläche des Zurrmittels 4
   - 5: Rippen
   - 6: Schriftzug
   - LR: Längsrichtung des Schutzelements 1
Figuren 3 - 6
   - A: Zurrmittel
   - F: farbige Fasern
   - G: Grundgewebe
   - H: hochfeste Faser
   - K: Schutzschicht
   - L: Last
   - Ri,Ra: Rippen
   - S: Schutzelement

## Patentansprüche

1. Schutzelement für textile Zurr- oder Anschlagmittel (4,A) zum Heben, Spannen oder Zurren von Gegenständen (L), mit einer Schutzlage, die dazu bestimmt ist, zwischen dem Zurr- oder Anschlagmittel (4,A) und dem jeweiligen Gegenstand (L) angeordnet zu werden, wobei die Schutzlage aus einem textilen Grundgewebe (2,G) gebildet ist, das mindestens auf seiner dem Zurr- oder Anschlagmittel (4,A) zugeordneten Oberfläche ein textiles Material (H) trägt,
**dadurch gekennzeichnet, dass** das textile Material fest mit dem Grundgewebe (2,G) verwebt ist, und das aufgrund seiner Formgebung, seiner Anordnung und / oder seiner Materialeigenschaften im an dem Zurr- oder Anschlagmittel (4,A) anliegenden Zustand andere Gleiteigenschaften besitzt als das Grundgewebe (G), dass das Schutzelement schlauchförmig ausgebildet ist, dass das vom Grundgewebe (2,G) getragene textile Material sich mindestens über einen Längsabschnitt der Innenseite des Schutzelements (1,S) erstreckt, dass das vom Grundgewebe (2,G) getragene textile Material aus einer hochfesten Faser (H) besteht, dass das vom Grundgewebe (2,G) getragene textile Material (H) Erhebungen (Ri,Ra) auf dem Grundgewebe (2,G) bildet und dass das vom Grundgewebe (2,G) getragene Material (H) sich in Längsrichtung (LR) des Schutzelements (1,S) erstreckende Rippen (Ri,Ra) bildet, wobei zusätzlich zu den Schussfäden des Grundgewebes Fasern als Schussfäden derart in das Grundgewebe (2,G) eingewebt sind, dass die Fasern die sich in Längsrichtung des Schutzelements erstreckenden Rippen (Ri,Ra) bilden.

2. Schutzelemente nach Anspruch 1,
**dadurch gekennzeichnet, dass** das Zurr- oder Anschlagmittel (4,A) frei in dem Schutzelement (1,S) verschiebbar ist.

3. Schutzelement nach Anspruch 1 oder 2,
**dadurch gekennzeichnet, dass** das vom Grundgewebe (2,G) getragene textile Material aus einem Fasergemisch (H) besteht.

4. Schutzelement nach einem der voranstehenden Ansprüche,
**dadurch gekennzeichnet, dass** das vom Grundgewebe (2,G) getragene textile Material (H) gezwirnt ist.

5. Schutzelement nach einem der voranstehenden Ansprüche,
**dadurch gekennzeichnet, dass** das vom Grundgewebe (2,G) getragene textile Material (H) eine glattere Oberfläche aufweist als das Grundgewebe (2,G).

6. Schutzelement nach einem der voranstehenden Ansprüche,
**dadurch gekennzeichnet, dass** in das Grundgewebe (2,G) eine Markierung (6) eingewebt ist, die die Lage des vom Grundgewebe (2,G) getragenen textilen Materials (H) anzeigt.

7. Zurr- oder Anschlagmittel, wie, Seil, Gurt oder Band, ausgestattet mit einem gemäß einem der Ansprüche 1 bis 6 ausgebildeten Schutzelement (1,S).

## Claims

1. Protective element for textile lashing or fixing means (4, A) for lifting, fixing or lashing objects (L), comprising a protective layer which is intended for arrangement between the lashing or fixing means (4, A) and the respective object (L), wherein the protective layer is formed from a textile backing fabric (2, G) which carries a textile material (H) at least on its surface associated with the lashing or fixing means (4, A), **characterised in that** the textile material being securely woven to the backing fabric (2, G) and which, owing to its shaping, its arrangement and/or its material properties, in the state abutting the lashing or fixing means (4, A) has different sliding properties to the backing fabric (G), **in that** the protective element is tubular, **in that** the textile material carried by the backing fabric (2, G) extends at least over a longitudinal section of the inner side of the protective element (1, S), **in that** the textile material carried by the backing fabric (2, G) is made from a high-strength fibre (H), **in that** the textile material (H) carried by the backing fabric (2, G) forms elevations (Ri, Ra) on the backing fabric (2, G) and **in that** the textile material (H) carried by the backing fabric (2, G) forms ribs (Ri, Ra) extending in the longitudinal direction (LR) of the protective element (1, S), wherein, in addition to the weft threads of the backing fabric, fibres are woven as weft threads into the backing fabric (2, G) in such a manner that the fibres form the ribs (Ri, Ra) extending in the longitudinal direction of the protective element.

2. Protective elements according to claim 1, **characterised in that** the lashing or fixing means (4, A) is freely displaceable in the protective element (1, S).

3. Protective element according to claim 1 or 2, **characterised in that** the textile material carried by the backing fabric (2, G) is made from a mixture of fibres (H).

4. Protective element according to any one of the preceding claims, **characterised in that** the textile material (H) carried by the backing fabric (2, G) is twisted.

5. Protective element according to any one of the preceding claims, **characterised in that** the textile material (H) carried by the backing fabric (2, G) has a smoother surface than the backing fabric (2, G).

6. Protective element according to any one of the preceding claims, **characterised in that** a marking (6) is woven into the backing fabric (2, G) which indicates the position of the textile material (H) carried by the backing fabric (2, G).

7. Lashing or fixing means, such as cable, belt or strap, provided with a protective element (1, S) constructed according to one of claims 1 to 6.

## Revendications

1. Elément de protection pour des moyens d'amarrage et de blocage textiles (4,A) pour soulever, serrer ou amarrer des objets (L), avec une couche de protection, qui est destinée à être disposée entre le moyen d'amarrage ou de blocage (4, A) et l'objet (L) concerné, la couche de protection étant formée par un tissu de base textile (2, G), qui porte une matière textile (H) au moins sur sa surface associée au moyen d'amarrage ou de blocage (4, A), **caractérisé en ce que** la matière textile est fixée au tissu de base (2, G) par tissage et qu'en raison de son façonnage, de sa disposition et / ou de ses propriétés propres à la matière, elle possède, en contact au moyen d'amarrage ou de blocage (4,A), d'autres propriétés de glissement que le tissu de base (G), que l'élément de protection présente une forme tubulaire, que la matière textile portée par le tissu de base (2, G) s'étend au moins sur une section longitudinale de la face intérieure de l'élément de protection (1, S), que la matière textile portée par le tissu de base (2, G) consiste en une fibre à résistance élevée (H), que la matière textile (H) portée par le tissu de base (2, G) forme des élévations (Ri, Ra) sur le tissu de base (2, G) et que la matière (H) portée par le tissu de base (2, G) forme des côtes (Ri, Ra) qui s'étendent dans la direction longitudinale (LR) de l'élément de protection (1, S), où, en plus des fils de trame du tissu de base, des fibres sont tissées dans le tissu de base (2, G) comme fils de trame, de façon à ce que les fibres forment des côtes (Ri, Ra) qui s'étendent dans la direction longitudinale de l'élément de protection.

2. Élément de protection selon la revendication 1, **caractérisé en ce que** le moyen d'amarrage ou de blocage (4, A) peut être déplacé librement dans l'élément de protection (1, S).

3. Élément de protection selon la revendication 1 ou 2, **caractérisé en ce que** la matière textile portée par le tissu de base (2, G) consiste en un mélange de fibres (H).

4. Élément de protection selon l'une des revendications précédentes, **caractérisé en ce que** la matière textile (H) portée par le tissu de base (2, G) est retordue.

5. Élément de protection selon l'une des revendications précédentes, **caractérisé en ce que** la matière textile (H) portée par le tissu de base (2, G) présente une surface plus lisse que le tissu de base (2, G).

6. Élément de protection selon l'une des revendications précédentes, **caractérisé en ce que**, dans le tissu de base (2, G), est tissée une marque (6), qui indique la position de la matière textile (H) portée par le tissu de base (2, G).

7. Moyen d'amarrage ou de blocage, tel que câble, sangle ou courroie, équipé d'un élément de protection (1, S) conçu selon l'une des revendications 1 à 6.
